# EUROPEAN PATENT SPECIFICATION

(11) **EP 1 363 022 B1**
(45) Date of publication and mention of the grant of the patent: **10.12.2008**
(21) Application number: 02010626.6
(22) Date of filing: 10.05.2002
(51) Int. Cl.: F04B 27/10, F16C 33/32, F16C 33/34, F16C 33/62

(54) **A wobble plate arrangement for a compressor**
Taumelscheibenvorrichtung für einen Kompressor
Plateau en biais pour un compresseur

(43) Date of publication of application: 19.11.2003
(73) Proprietor: Valeo Compressor Europe GmbH, 68766 Hockenheim (DE)
(72) Inventor: Schwarzkopf, Otfried, 71634 Ludwigsburg (DE)
(74) Representative: Popp, Eugen

(56) References cited:
- EP-A- 1 052 403
- US-A- 3 552 886
- US-A- 5 439 297
- US-A- 5 700 094
- US-B1- 6 318 899
- PATENT ABSTRACTS OF JAPAN vol. 015, no. 358 (M-1156), 10 September 1991 (1991-09-10) -& JP 03 141877 A (HITACHI LTD), 17 June 1991 (1991-06-17)
- PATENT ABSTRACTS OF JAPAN vol. 015, no. 081 (M-1086), 25 February 1991 (1991-02-25) -& JP 02 301679 A (TOYOTA AUTOM LOOM WORKS LTD), 13 December 1990 (1990-12-13)

## Description

The present invention relates to a wobble plate arrangement for a swash plate compressor, in particular a CO₂ compressor, for a vehicle air-conditioning system, and to a compressor incorporating such an arrangement as specified in the preamble of claims 1 and 30, respectively. Such an arrangement is known eg from EP-A-1 052 403, US-A-3 552 886 or JP-A-03148877.

DE 198 33 604 A1 describes a swash plate compressor for a vehicle air-conditioning system which has a wobble plate arrangement between the pistons of the compressor and a drive shaft. The wobble plate is coupled to the swash plate via a thrust bearing and a shoulder bearing or angular ball bearing. As the wobble plate in this compressor is made of a light alloy, the inner and outer faces of the bearings must be made from stronger inserts. In the case of the thrust bearing, a thin axial disk is inserted to form the bearing face on the wobble plate whereas in the case of the shoulder bearing or angular ball bearing a thin ring-type bearing face is used. The latter allows the predetermined radial assembly space between the connecting rod seat in the wobble plate and the swash plate to be utilized. Also, the wobble plate is coupled to the casing by an anti-rotation lock means so that it may only perform a wobbling motion without rotation.

In contrast, US 5,826,490 describes a compressor with a wobble plate arrangement that comprises a swash plate on which a wobble plate is rotatably mounted. The wobble plate has several degrees of freedom with respect to the swash plate so that it can perform both wobbling and rotating movements dependent on the operating pressure and rotational speed. In order to permit the take-up of forces and moments by the driving mechanism of the compressor there are three bearing sites provided with two needle thrust bearings and a needle radial bearing. As a result of the forces which must be withstood by the wobble plate, it is made of steel, a total of five bearing surfaces forming an integral part of the wobble plate. These surfaces must be subject to hardening thermal treatments and to grinding to ensure smoothness.

In addition to the foregoing, the multiplicity and locate of the bearings makes their lubrication by means of an oil spray difficult. Centrifugal forces within the compressor tend to fling lubricating oil outwards so that quantity of lubricant actually supplied tends to be small and the actual lubrication which occurs poor.

Also, the weight of the wobble plate has a detrimental effect, as with increasing rotational speed the wobble plate affects the equilibrium of forces of the swash plate mechanism so that the compressor tends to run with a larger tilt angle and therefore produce a great power than is required. However, what is desirable is an opposite behaviour wherein with increasing rotational speed, as the power is increased anyway, the piston stroke is made smaller to compensate for it but this would require an increased intervention by a control mechanism for the compressor.

EP 0 853 198 discloses an arrangement generally similar to that in DE 198 33 604 A1 mentioned above but the shape of the wobble plate and the number and type of the bearings are different. However, the problems of lubrication described above with reference to US 5,826,490 also apply here but may not be quite so severe owing to the reduced number of bearing locations. On the other hand, in a CO₂ compressor the durability of the thrust bearing, which accommodates the axial piston forces is particularly endangered by poor lubrication. Further more, this compressor requires the wobble plate to be made of a material which has high strength and is particularly resistant to wear because the bearing surface of the thrust bearing is located directly on the wobble plate.

EP 1 052 403 makes mention of the above patent as prior art and is intended to represent a further development thereof. It attempts to simplify the complex structure of the radial bearing arrangement by making one of the bearing surfaces an integral part of the wobble plate.

Furthermore US-A-5 700 094 and JP-A-02 301679 refer to the use of ceramic coating on swash plate arrangements.

The object of the present invention is to provide a wobble plate arrangement for a swash plate compressor which is of simple construction and which reduces the aforementioned problems of lubrication and wear.

It is a further object of the invention to provide a wobble plate arrangement which exhibits a low power loss input, which is especially suitable for use a higher speeds, and which exhibits good tribological behaviour at elevated temperatures.

According to a first aspect of the present invention there is provided a wobble plate arrangement for a swash plate compressor as specified in claim 1.

Preferably, at least one of the running surfaces is formed by a ceramic coating. In addition, the rolling bearings may also comprise a ceramic material.

Preferably also, the ceramic coating has been machine finished so that it is flush with the surrounding surface of the race.

The ceramic coating is preferably applied by thermal spraying and has a thickness between 30 µm and 70 µm inclusive.

In addition, the rolling bearings may also comprise a ceramic material.

In a preferred arrangement, at least two antifriction bearings are provided between the swash plate and the wobble plate and at least one of the running surfaces of each of the bearings is formed by a ceramic coating. Advantageously, the ceramic running surfaces are provided on the wobble plate.

The wobble plate may also be additionally provided with at least one slide face for cooperation with a bearing arrangement located between the wobble plate and a piston, and the slide face may also be formed by a ceramic coating.

Alternatively or in addition, the ceramic running surfaces may be provided on the swash plate.

Preferably, the ceramic material comprises any of silicon nitride, zirconium oxide and wolfram carbide.

Preferably also, at least one of the two running surfaces of the bearing is integrally formed with either the swash plate or the wobble plate, advantageously with the wobble plate.

The bearing comprising the ceramic running surface or surfaces may be located between apposed radially extending faces of the swash plate and the wobble plate or between apposed circumferential faces of the swash plate and the wobble plate.

In an alternative embodiment that is particularly suited for use in a compressor with a fixed piston displacement, the wobble plate preferably comprises a two-piece wobble plate that is mounted on each side of a central swash plate with two antifriction bearings located respectively therebetween.

In such an embodiment, the wobble plate preferably comprises two separate annular pieces which are fitted respectively on each side of the swash plate. The mass of each of the annular pieces comprising the wobble plate may then be made less than 50 g.

Alternatively, the wobble plate is fitted peripherally around the edge of the swash plate. Here, a radial bearing is preferably provided between the wobble plate and the swash plate around the peripheral edge of the swash plate.

Preferably also, the outer surfaces of the wobble plate opposite the running surfaces comprise slide faces for cooperation with a bearing arrangement located between the wobble plate and a piston.

In all of the embodiments of the invention, preferably the wobble plate has two degrees of rotary freedom so that it can rotate jointly with the swash plate and rotate relative to the swash plate.

Preferably also, the swash plate and the wobble plate are joined to one another during assembly of the bearing to form an integrated bearing unit from which the bearing cannot be separately detached. Here, the rolling bearings are preferably retained in position by the insertion of a cage between the two races of the bearing.

The wobble plate preferably comprises one of an aluminium alloy, unhardened steel, and tempered steel. In contrast, the swash plate is preferably made from tempered steel.

According to a second aspect of the present invention there is provided a compressor for a vehicle air conditioning system comprising a wobble plate arrangement according to the first aspect of the invention.

According to a third aspect of the present invention there is provided a compressor for a vehicle air conditioning system as specified in Claim 30.

Preferably, the swash plate and the wobble plate have been joined to one another during assembly of the bearing to form an integrated bearing unit from which the bearing cannot be separately detached.

Preferably also, the wobble plate is additionally provided with at least one slide face for cooperation with a bearing arrangement located between the wobble plate and a piston, and the slide face is formed by a ceramic coating.

Preferably also, the swash plate is driven by a drive plate attached to the drive shaft and a thrust bearing is located between the drive plate and a casing of the compressor, and at least one running surface of the thrust bearing comprises a ceramic coating formed on inside surface of the casing and/or the drive plate.

In an embodiment wherein compressor has a fixed piston displacement, preferably the wobble plate comprises a two-piece wobble plate that is mounted on each side of a central swash plate with two antifriction bearings located respectively therebetween.

Advantageously, the wobble plate comprises two facing rings mounted respectively on opposite sides of the swash plate

Preferably also, a transverse axis of the bearings is arranged so that it will be coincident with a longitudinal axis of the piston driven by the wobble plate arrangement at a point in the rotation of the swash plate when force will be first applied to the piston in the direction towards the cylinder.

Preferably also, the diameter of a sliding surface of the bearing arrangement located between the wobble plate and a piston is commensurate with the operative diameter of the piston.

The various aspects of the present invention will now be described by way of example with reference to the accompanying drawings, in which:-
Fig. 1 is a longitudinal cross-sectional view of a swash plate compressor comprising a first embodiment of wobble plate arrangement according to the present invention;
Fig. 2 is a view of part of a wobble plate arrangement mounted on a drive shaft similar to that shown in Fig. 1 but illustrating a modified bearing arrangement;
Fig. 3 is view similar to Fig. 2 of a second modified bearing arrangement;
Fig. 4 is a schematic side view of a second embodiment of wobble plate arrangement which can be manufactured in accordance with the present invention;
Fig. 5 is a transverse schematic profile the wobble plate arrangement shown in Fig. 4;
Figs. 6 and 7 are schematic longitudinal cross-sectional views of the wobble plate arrangement profiled in Fig. 5 along the lines VI-VI and VII-VII respectively;
Figs. 8 and 9 are front and side elevations of a bracket for use in the support of a compressor within a vehicle; and
Fig. 10 is a cross-section along the line X-X in Fig. 8.

In the following description the same reference numerals are used for the same or equivalent components of the invention and associated apparatus.

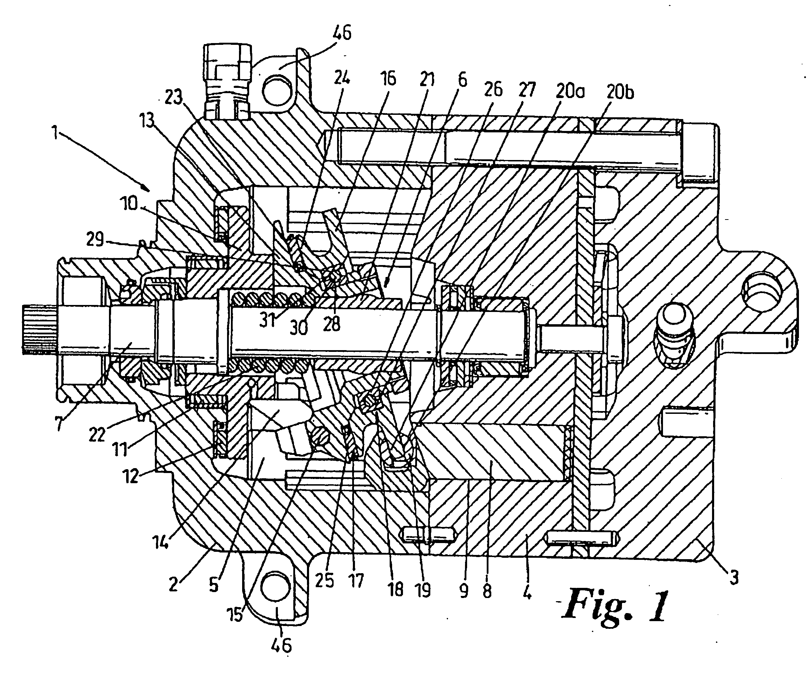

As shown in the Fig. 1, a compressor 1 comprises front and rear housings 2 and 3 respectively between which is bolted a cylinder block 4. A crank chamber 5 is defined by the front housing 2 and the cylinder block 4 within which is located a wobble plate arrangement 6 mounted on a drive shaft 7. The wobble plate arrangement 6 drives a plurality of pistons 8 within a corresponding number of cylinders 9 defined by the cylinder block 4.

The drive shaft 7 is supported by the front housing 2 and the cylinder block 4 and driven by external means (not shown) coupled to a vehicle engine (not shown). A drive plate 10 is fixed to the drive shaft 7 within the crank chamber 5. The drive plate 10 rotates with the drive plate and is supported by a radial bearing 11 and a thrust bearing 12 against the interior of the housing 2. The drive plate 10 is coupled to a swash plate 13 in known manner via an articulated arm 14 which is connected to the swash plate 13 at a swivel point 15. This connection allows the swash plate 13 to slide along and to tilt with respect to the drive shaft 7.

The swash plate 13 forms part of the wobble plate arrangement 6 which comprises the swash plate 13 and a wobble plate 16 that is rotatably mounted on the swash plate 13. The wobble plate 16 is able to rotate freely with respect to the swash plate 13, antifriction bearings 17 and 18, as will be described in more detail below, being provided between the swash plate 13 and the wobble plate 16. The wobble plate 16 is also able to rotate freely with respect to the pistons 8, an additional bearing arrangement 19 being provided which allows movement of the wobble plate 16 relative to the pistons 8 in a circumferential direction by permitting the wobble plate to slide between the two halves of the bearing arrangement 19. To this end, the wobble plate 16 is provided with slide faces 20a and 20b.

In order to reduce the stroke of the pistons 8, the swash plate 13 is not only able to swivel about the swivel point 14 but also to rotate about a guide arrangement 21 which is displaceable axially on the drive shaft 7 and loaded by a compression spring 22. Hence, as the drive shaft 7 rotates, the drive plate 10 and the articulated arm 14 connected thereto rotate and the latter drives the swash plate 13. Rotation of the swash plate 13 sets the wobble plate 16 into a wobbling motion to drive the pistons 8.

In the embodiment shown in Fig. 1, the thrust bearing 17 comprises a roller bearing located between apposed radially extending faces 23 and 24 of the swash plate 13 and the wobble plate 16 respectively. It will be appreciated that the rollers 25 of the bearing 17 are only subjected to loads perpendicular to their axis of rotation. However, the bearing 18 is located between apposed bearing surfaces 26 and 27 provided by the swash plate 13 and the wobble plate 16 respectively and comprises a single-row grooved ball bearing which can take some thrust loads in addition to considerable radial load.

The bearing surfaces 26 and 27 form inner and outer races. The rolling bearings comprise balls 30 which are located between the inner and outer bearing surfaces 26 and 27 and retained in position by a cage 31.

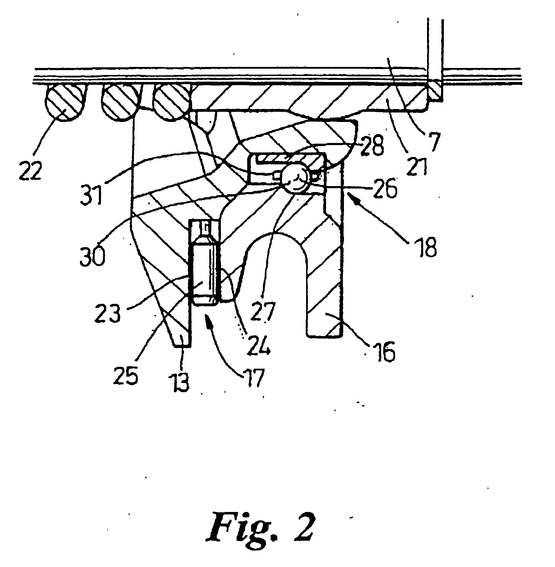

In a first preferred modification, as shown in Fig. 2, the outer bearing surface 27 of the bearing 18 is provided by an appropriately profiled surface of the wobble plate 16 opposite the inner bearing surface 26. The outer race is thereby integrally formed with the wobble plate 16 and a separate outer insert to provide the outer race is not therefore required.

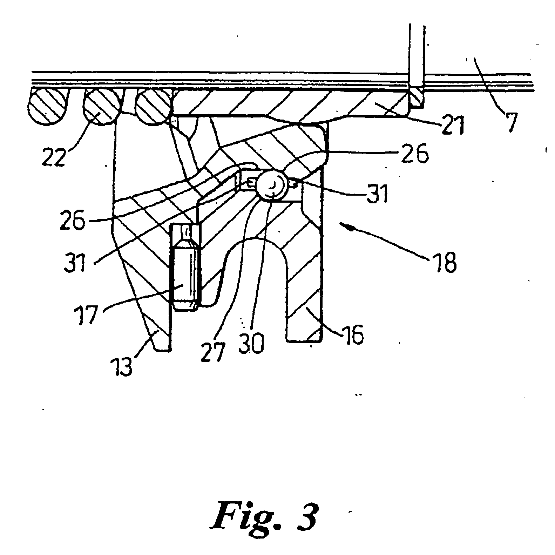

In a second modification, as shown in Fig. 3, the inner bearing surface 26 of the bearing 18 may also be provided as an integral part of the swash plate 13, obviating the requirement for the inner insert 28.

In both of the modifications shown in Figs 2 and 3, the cage 31 holds the balls 30 in position and once inserted prevents the swash plate 13 and the wobble plate 16 from being detached from one another. The swash plate 13 and the wobble plate 16 are thereby integrated to form a bearing unit and may thus be manufactured as a sealed unit so that the bearing 18 cannot not be disassembled.

In accordance with the invention, at least one of the running surfaces of the at least one of the bearings 17, 18 and/or the rolling bearings 25 or 30 comprises a ceramic material.

In one embodiment of the invention, for economic reasons, preferably at least the wobble plate 16, but in some embodiments the swash plate 13 also, is provided with a ceramic coating to form the relevant bearing surfaces of the bearings 16 and 17, the rolling bearings 25 and 30 being made conventionally of anti-friction bearing steel.

The ceramic coatings forming the bearing surfaces of the bearings 17 and 18 are not shown in the drawings. However, it should be appreciated that they are formed by a removal of part of the surface layer of the component, such as the wobble plate 16, in the region which will define the bearing surface. A layer of ceramic material is then applied to this region, for example by thermal spraying, and mechanically finished, for example by grinding. Typically, approximately a surface layer 0.2 mm is removed from the component, which is then sprayed with a coating sufficiently thick to provide a machining allowance, for example the coating may be applied to a depth of 0.4 mm. After finishing, therefore, the ceramic coating can be ground flush with the surrounding surface of the component. Preferably, the ceramic coating has a thickness between 30 µm and 70 µm inclusive.

Suitable ceramic materials which may be used in the invention include silicon nitride, zirconium oxide and wolfram carbide.

A wobble plate 16 provided with ceramic bearing surfaces by the above method will not significantly add to the cost of the compressor 1, as previously steel wobble plates already required heat treatment and finishing. The invention also permits the wobble plate 16 to be made from aluminium provided that a strong base for the ceramic coating is provided. In this case, the thickness of the ceramic coating can be adjusted relatively freely in response to requirements. The use of a high-strength, heat-resistant aluminium is sufficient to satisfy the high temperature requirements of a CO₂ compressor and has a positive influence on the control characteristics of a controllable axial piston-type compressor owing to its comparatively light weight. In addition, dissipation of frictional heat from the bearing surfaces of the wobble plate 16 to the environment within the crank case 5 is improved.

The following variations, within the scope of the invention, are preferred.
1. The wobble plate 16 is manufactured from aluminium and provided with bearing surfaces 24 and 26 for the bearings 17b and 18 that are made from a ceramic coating as specified in claim 1.
2. The wobble plate 16 is manufactured from unhardened steel and provided with bearing surfaces 24 and 26 for the bearings 17b and 18 that are made from a ceramic coating as specified in claim 1.
3. The wobble plate 16 is manufactured from tempered steel and provided with bearing surfaces 24 and 26 for the bearings 17b and 18 that are made from a ceramic coating as specified in claim 1.
4. The wobble plate 16 is manufactured from an aluminium alloy and dispersion hardened with between 11% and 35% silicon prior to being provided with bearing surfaces 24 and 26 for the bearings 17b and 18 that comprise a ceramic coating as specified in claim 1.
5. In each of the variants 1 to 4 above, the opposite bearing surfaces 23 and 26 on the swash plate 13 may be made by a ceramic coating as specified in claim 1. Typically, the swash plate 13 is made from tempered steel.
6. In any of the aforementioned variants wherein a ceramic coating as specified in claim 1 is provided over hardened and ground steel, the coating is applied in a thin film by PVD or CVD processes so as to produce very favourable coefficients of friction.
7. In an additional variation, the slide faces 20a and 20b of the wobble plate 16 may be formed by a ceramic coating as specified in claim 1.
8. In a further additional variation, one or both of the bearing surfaces of the thrust bearing 12 for the drive plate 10 are provided by ceramic coatings as specified in claim 1 on an inside surface of the front casing 4 and/or the drive plate 10.
9. In further variations, the bearing 17 and/or the bearing 18 may be made with ceramic bearing surfaces and ceramic rolling bearings.

It will be appreciated that other than in any case wherein both bearing surfaces and the rolling bearings of any bearing are all made of ceramic material, hybrid bearing arrangements are provided within the scope of claim 1. Such hybrid arrangements have been found to be exhibit several advantages. They enable reliable running of the compressor, particularly at higher rotational speeds, as they have good tribological characteristics. The lower coefficients of thermal expansion of the ceramic material employed in comparison to that of conventional metal components and materials reduces power loss, in particular when lubricating conditions are poor and at high running temperatures, because they 'run colder' and have significantly reduced tendency to seize up. They also enable significant increases in the rotational speed of the compressor.

Also, it will be appreciated that dependent on the operating conditions, the compressor 1 will operate between two limited conditions wherein the wobble plate 16 either rotates fully at the same revolutions per minute as the swash plate 13 or does not rotate and its motion is confined solely to a wobbling motion. The arrangement functions particularly well under high loads. However, the provision of hybrid bearing arrangements as described above advantageously enable the frictional moment of the wobble plate arrangement 6 to be optimized at low loads.

The embodiments of the invention described above and with reference to Figs. 1 to 3 have all employed wobble plate arrangements 6 wherein the swash plate 13 is able to slide along and to tilt with respect to the drive shaft 7, thus varying the displacement of the pistons 8 within the cylinders 9. Such an arrangement is that normally employed where the drive shaft 7 is powered by a vehicle engine. However, it will be appreciated that the invention is also applicable to a swash plate compressor that has a fixed piston displacement, such as occurs in electrically operated automotive compressors. In such electrically operated compressors, control of the compressor output can be accomplished by controlling the rotational speed of the drive shaft 7.

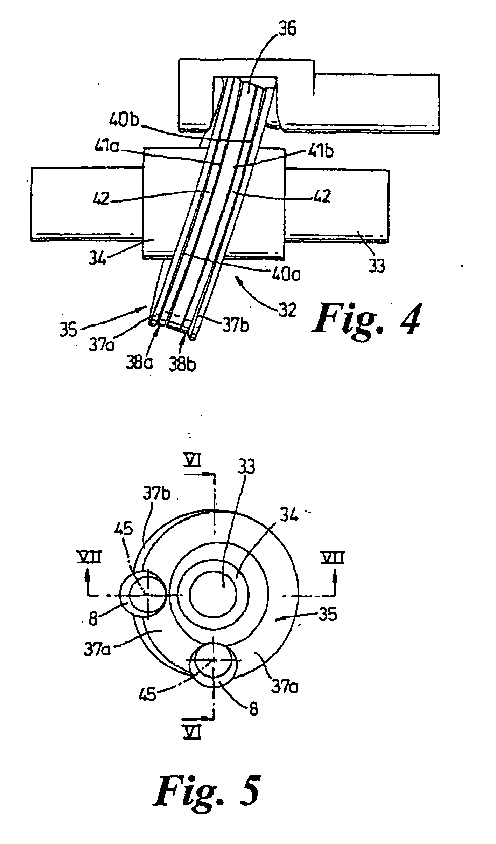

As a result of the fact that the swash plate does not need to tilt, the wobble plate arrangement of such a compressor can be considerably simplified. The application of the present invention to such an arrangement also assists in its simplification. Such an arrangement 32 will now be described with reference to Figs. 4 to 7.

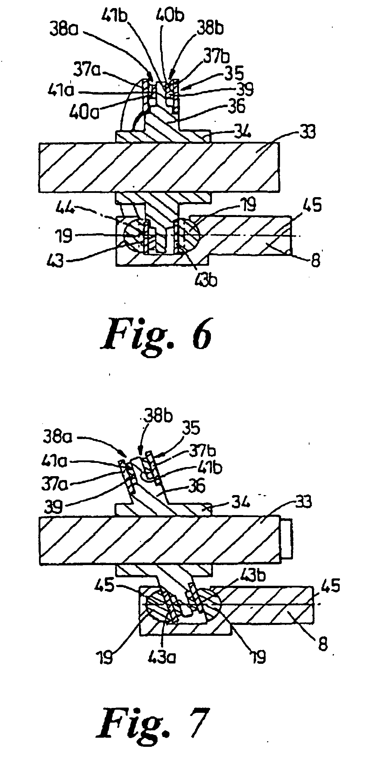

The wobble plate arrangement 32, which is shown mounted on a drive shaft 33 via a collar 34, comprises a two-piece wobble plate 35 that is mounted on each side of a central swash plate 36. The swash plate 36 is fixed to the collar 34 so that it is rotated directly by the drive shaft 7. It therefore has a fixed tilt angle with respect to the shaft 7. The wobble plate 35 is formed in two annular pieces 37a and 37b that at least partially axially surround the swash plate 36. Between the swash plate 36 and each of the annular pieces 37a and 37b of the wobble plate 35 are bearings 38a and 38b respectively. These bearings 38a, 38b may comprise needle or roller rolling bearings 39 which are located between apposed radially extending running surfaces formed respectively on an inner face 40a, 40b of each of the wobble plate pieces 37a, 37b and on outer faces 41a and 41b of the swash plate 36. To this end, the outer annular region of the swash plate 36 which is surrounded by the wobble plate 36 has a reduced thickness, as shown in Figs 6 and 7. The rolling bearings 39 are held in position between the wobble plate 35 and the swash plate 36 by a cage 42. In a modification, the rolling bearings 39 may be formed in double rows.

It will be appreciated that the wobble plate 35 may comprise two separate pieces, such as the pieces 37a, 37b in this example, or alternatively comprise two pieces that are connected to one another, either by form-fitting or force-fitting, on either side of the swash plate 36. In the former arrangement, the cage 42, once inserted into the arrangement 32 prevents the swash plate 36 and the wobble plate 35 from being detached from one another. The swash plate 36 and the wobble plate 35 are thereby integrated to form a bearing unit. In the latter arrangement, the wobble plate 35 is fitted peripherally around the edge of the swash plate 36 and an additional radial bearing is provided between the wobble plate 35 and the swash plate 36 around the peripheral edge of the swash plate 36.

However, it is advantageous for the wobble plate 35 to comprise two separate, unconnected pieces 37a, 37b as each can then find its own separate equilibrium during use of the compressor, which can reduce frictional losses within the compressor.

In accordance with the invention, at least one of one of the running surfaces 40a, 40b, 41a, 41b of the at least one of the bearings 38a, 38b 39 comprises a ceramic material as specified in claim 1.

Preferably, at least the wobble plate 35 is provided with said ceramic coatings to form the running surfaces 40a and 40b. Advantageously, the swash plate 36 is also provided with ceramic coatings to form the running surfaces 41a, 41b, the rolling bearings 39 being made conventionally of anti-friction bearing steel. In this way a hybrid bearing is produced which has the same advantages as detailed above.

The wobble plate 35 and the swash plate 36 are provided with the ceramic coatings in exactly the same way as described above prior so assembly of the arrangement 32. In addition, the same ceramic materials may be used. Owing to the simple design of the arrangement 32, the running surfaces 40a, 40b, 41a, 41b easily accessed for coating and grinding. As a result, the axial play of the bearings 38a, 38b can be set with high precision.

As the swash plate 36 extends radially outwards sufficiently to support the wobble plate pieces 37a, 37b, this means that these pieces 37a, 37b can be made in the form of facing rings out of thin, light-weight material, such as aluminium, so that they exhibit only a slight inertia and produce small forces of gravity. Typically, it expected that the mass of such annular rings will be less than 50 g per ring and the difference between their inner and outer diameter will lie in the range 15 mm to 30 mm inclusive.

This design also has the result that the swash plate 36 extends radially into the opening of the piston 8, between the hemispherical bearings 19. The outer surfaces of the wobble plate pieces 37a and 37b opposite to the running surfaces 40a, 40b comprise slide faces 43a and 43b respectively for cooperation with a bearing arrangement 19 located between the wobble plate and a piston. The bearings 38a, 38b will therefore also penetrate into this opening to a greater or lesser extent, dependent on the relative dimensions of the various components. As in the first embodiment, the slide faces 43a and 43b of the wobble plate pieces 37a and 37b may also be formed by a ceramic coating.

It is advantageous to make the transverse axis 44 of the bearings 38a and 38b coincide with the longitudinal axis 45 of the piston 8 at the point in the rotation of the swash plate 36 when force is first applied to the piston 8 in the direction towards the cylinder 9, as shown in Fig. 6. It can also be advantageous to make the diameter of the sliding surface of the hemispherical bearings 19 commensurate with the operative diameter of the piston 8.

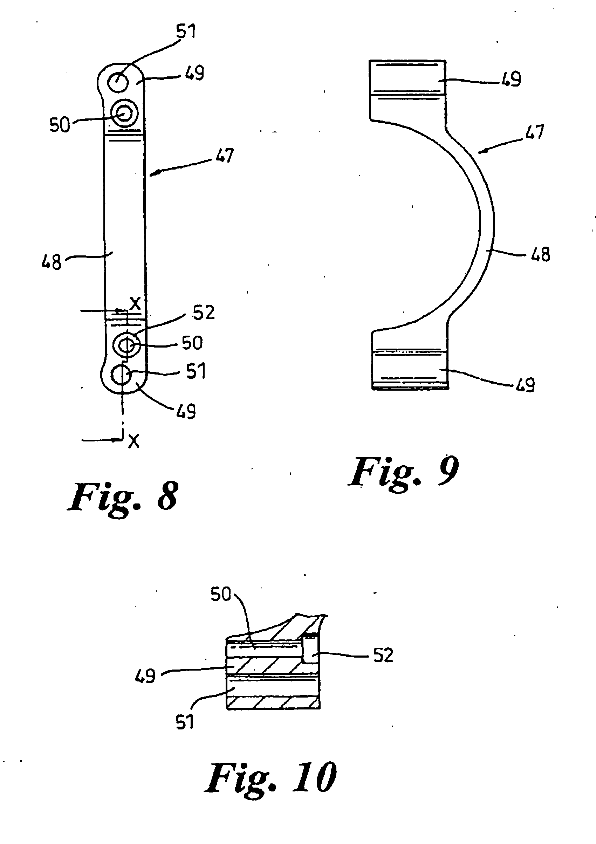

The compressors described above typically have a housing as shown in Fig. 1 which has mounting lugs 46 integrally connected to the front housing 2 in order that the compressor can be bolted directly in position within a vehicle. However, in a modified arrangement, two identical brackets 47, as shown in Figs. 8 to 10 may be used for the mounting of the compressor 1 instead. Each bracket 47 comprises a semicircular strap-like portion 48 in order that it can fit snugly around half of the housing 2 of the compressor and has end portions 49 that are each provided with two parallel bores 50 and 51. The first bore 50, which is provided with countersinking 52, is provided so that two of the brackets 47 can be positioned around the body of the compressor, typically the front housing 2, with their respective bores 50 and 52 aligned, and then bolted together so that the compressor 1 is firmly clamped between the two brackets 47. The heads of the clamping bolts used and the corresponding nuts (not shown), fit into the countersinking 52. The second bores 51 are then used to bolt the brackets 47 and thereby the compressor 1 in position within the vehicle.

It will be appreciated that if mounting brackets 47 are to be used for mounting the compressor 1, it should be manufactured without any integral lugs 46. The brackets 47 are particularly suitable for a compressor 1 wherein the housing is made of forged steel, the reduction in weight of the housing 2 by virtue of the omission of the integral lugs 46 being an advantage.

## Claims

1. A wobble plate arrangement (6: 32) for a swash plate compressor (1) comprising a swash plate (13: 36) on which a wobble plate (16: 35) is rotatably mounted and at least one antifriction bearing (17, 18: 38a, 38b) located therebetween which comprises two races defining running surfaces (23, 24, 26, 27: 40a, 40b, 41a, 41b) between which is located a plurality of rolling bearings (25, 30: 39),
**characterized in that**
at least one of the running surfaces (23, 24, 26, 27: 40a, 40b, 41a, 41b) comprises a ceramic material, wherein the bearing surfaces of the bearings are formed by a removal of a part of the surface user of the component in the region which will define the bearing surface and a layer of ceramic material is then applied to this region.

2. An arrangement (6: 32) as claimed in Claim 1,
**characterized in that**
at least one of the running surfaces (23,24,26,27: 40a,40b,41a,41b) is formed by a ceramic coating.

3. An arrangement (6: 32) as claimed in Claim 2,
**characterized in that**
the ceramic coating has been machine finished so that it is flush with the surrounding surface of the race.

4. An arrangement (6: 32) as claimed in Claim 2 or Claim 3,
**characterized in that**
the ceramic coating has been applied by thermal spraying.

5. An arrangement (6: 32) as claimed in any of Claims 2 to 4,
**characterized in that**
the ceramic coating has a thickness between 30 µm and 70 µm inclusive.

6. An arrangement (6: 32) as claimed in any of Claims to 6,
**characterized in that**
the rolling bearings (25,30: 39) comprise a ceramic material.

7. An arrangement (6: 32) as claimed in any of Clams 1 to 6, wherein at least two antifriction bearings (17,18: 38a, 38b) are provided between the swash plate (13: 36) and the wobble plate (16: 35),
**characterized in that**
at least one of the running surfaces (23,24,26,27: 40a,40b,41a,41b) of each of the bearings (17,18: 38a, 38b) is formed by a ceramic coating.

8. An arrangement (6: 32) as claimed in Claim 7,
**characterized in that**
the ceramic running surfaces (24,27: 37a,37b) are provided on the wobble plate (16: 35).

9. An arrangement (6: 32) as claimed in Claim 8, wherein the wobble plate (16: 35) is additionally provided with at least one slide face (20a,20b: 43a,43b) for cooperation with a bearing arrangement (19) located between the wobble plate (16: 35) and a piston (8), and
**characterized in that**
the slide face (20a,20b: 43a,43b) is formed by a ceramic coating.

10. An arrangement (6: 32) as claimed in Claim 7,
**characterized in that**
the ceramic running surfaces (23,26: 41a,41b) are provided on the swash plate (13,36).

11. An arrangement (6: 32) as claimed in any of Claims 1 to 10,
**characterized in that**
the ceramic material comprises any of silicon nitride, zirconium oxide and wolfram carbide.

12. An arrangement (6: 32) as claimed in any of Claims 1 to 11,
**characterized in that**
at least one of the two running surfaces (23,24,26,27: 40a,40b,41a,41b) of the bearing (17,18: 38a, 38b) is integrally formed with either the swash plate (13: 26)or the wobble plate (16:35).

13. An arrangement (6: 32) as claimed in Claim 12,
**characterized in that**
one (24,27: 40a, 40b) of the two running surfaces of the bearing (17,18: 38a,38b) is integrally formed with the wobble plate (16: 35).

14. An arrangement (6: 32) as claimed in Claim 12 or Claim 13,
**characterized in that**
the bearing (17: 38a, 38b) is located between apposed radially extending faces (23,24: 40a, 40b, 41a, 41b) of the swash plate (13: 36) and the wobble plate (16: 35).

15. An arrangement (6) as claimed in Claim 12 or Claim 13,
**characterized in that**
the bearing (18) is located between apposed circumferential faces (26, 27) of the swash plate (13) and the wobble plate (16).

16. An arrangement (6) as claimed in Claim 15,
**characterized in that**
an outer race of the bearing (18) is integrally formed with the wobble plate (16) and an inner race of the bearing (18) is integrally formed with the swash plate (13).

17. An arrangement (32) as claimed in any of Claims 1 to 16,
**characterized in that**
the wobble plate (35) comprises a two-piece wobble plate (37a, 37b) that is mounted on each side of a central swash plate (36) with two antifriction bearings (38a, 38b) located respectively therebetween.

18. An arrangement (32) as claimed in Claim 17,
**characterized in that**
the wobble plate (35) comprises two separate annular pieces (37a, 37b) which are fitted respectively on each side of the swash plate (36).

19. An arrangement (32) as claimed in Claim 18,
**characterized in that**
the mass of each of the annular pieces (37a, 37b) comprising the wobble plate (35) is less than 50 g.

20. An arrangement (32) as claimed in Claim 17,
**characterized in that**
the wobble plate (35) is fitted peripherally around the edge of the swash plate (36).

21. An arrangement (32) as claimed in Claim 20,
**characterized in that**
a radial bearing is provided between the wobble plate (35) and the swash plate (36) around the peripheral edge of the swash plate (36).

22. An arrangement (32) as claimed in any of Claims 18 to 21,
**characterized in that**
the rolling bearings (39) comprise needle bearings or roller bearings.

23. An arrangement (32) as claimed in any of Claims 18 to 22,
**characterized in that**
the outer surfaces of the wobble plate (35) opposite the running surfaces (40a, 40b) comprise slide faces (43a, 43b) for cooperation with a bearing arrangement (19) located between the wobble plate arrangement (32) and a piston (8).

24. An arrangement (6: 32) as claimed in any one of Claims 1 to 23,
**characterized in that**
the wobble plate (16: 35) has two degrees of rotary freedom so that it can rotate jointly with the swash plate (13: 36) and rotate relative to the swash plate (13: 26).

25. An arrangement (6: 32) as claimed in any of Claims 1 to 24,
**characterized in that**
the swash plate (13: 26)and the wobble plate (16: 35)
are joined to one another during assembly of the bearing (17,18: 38a,38b) to form an integrated bearing unit from which the bearing (17,18: 38a,38b) cannot be separately detached.

26. An arrangement (6: 32) as claimed in Claim 25,
**characterized in that**
the rolling bearings (18: 38a, 38b) are retained in position by the insertion of a cage (31: 42) between the two races of the bearing (18: 38a, 38b).

27. An arrangement (6:32) as claimed in any of Claims 1 to 26,
**characterized in that**
the wobble plate (16; 35) comprises one of an aluminium alloy, unhardened steel, and tempered steel.

28. An arrangement as claimed in any one of Claims 1 to 27,
**characterized in that**
the swash plate (13: 26) is made from tempered steel.

29. A compressor (1) for a vehicle air conditioning system
**characterized in that** it comprises a wobble plate arrangement (6: 32) as claimed in any one of Claims 1 to 28.

30. A compressor (1) for a vehicle air conditioning system comprising at least one piston (8) moveable in a cylinder (9), a drive shaft (7: 33), a wobble plate arrangement (6: 32) comprising a swash plate (13: 26) on which a wobble plate (16: 35) is rotatably mounted located between the piston (8) and the drive shaft (7: 33), and at least one antifriction bearing (17, 18: 38a, 38b) located between the swash plate (13: 26) and the wobble plate (16: 35) and comprising two races defining running surfaces (23, 24, 26, 27; 40a, 40b, 41a, 41b) between which is located a plurality of rolling bearings (25, 30: 39), and
**characterized in that**
at least one of the running surfaces (23, 24, 26, 27: 40a, 40b, 41a, 41b) comprises a ceramic material, wherein the bearing surfaces of the bearings axe formed by a removal of a part of the surface layer of the component in the region which will define the bearing surface and a layer of ceramic material is then applied to this region.

31. A compressor (1) as claimed in Claim 30,
**characterised in that**
the swash plate (13: 26) and the wobble plate (16: 35) have been joined to one another during assembly of the bearing (17,18: 38a,38b) to form an integrated bearing unit from which the bearing (17, 18: 38a,38b) cannot be separately detached.

32. A compressor (1) as claimed in Claims 30 or Claim 31,
wherein the wobble plate (16: 35) is additionally provided with at least one slide face (20a,20b: 43a, 43b) for cooperation with a bearing arrangement (19) located between the wobble plate arrangement (6: 32) and a piston (8), and
**characterized in that**
the slide face (20a,20b: 43a, 43b) is formed by a ceramic coating.

33. A compressor (1) as claimed in any of Claims 30 to Claim 32, wherein the swash plate (13 ) is driven by a drive plate (10) attached to the drive shaft (7) and a thrust bearing (12) is located between the drive plate (10) and a casing (4) of the compressor (1), and
**characterised in that**
at least one running surface of the thrust bearing (12) comprises a ceramic coating formed on inside surface of the casing (4) and/or the drive plate (10).

34. A compressor as claimed in any of Claims 30 to Claim 32, that has a fixed piston displacement,
**characterized in that**
the wobble plate (35) comprises a two-piece wobble plate (37a, 37b) that is mounted on each side of a central swash plate (36) with two antifriction bearings (38a, 38b) located respectively therebetween.

35. A compressor as claimed in Claim 34,
**characterized in that**
the wobble plate (35) comprises two facing rings (37a, 37b) mounted respectively on opposite sides of the swash plate (36).

36. A compressor as claimed in Claim 34 or Claim 35,
**characterized in that**
a transverse axis (43) of the bearings (38a, 38b) is arranged so that it will be coincident with a longitudinal axis (44) of the piston (8) driven by the wobble plate arrangement (32) at a point in the rotation of the swash plate (36) when force will be first applied to the piston (8) in a direction towards the cylinder (9).

37. A compressor as claimed in Claim 36,
**characterized in that**
the diameter of a sliding surface of the bearing arrangement (19) located between the wobble plate (35) and a piston (8) is commensurate with the operative diameter of the piston (8).

## Patentansprüche

1. Wankscheiben-Anordnung (6: 32) für einen Taumelscheiben-Kompressor (1), welcher eine Taumelscheibe (13: 36), auf welcher eine Wankscheibe (16: 35) drehbar befestigt ist, und zumindest ein reibarmes Lager (17, 18: 38a, 38b) enthält, welches dazwischen positioniert ist, welches zwei Laufringe enthält, welche Laufoberflächen (23, 24, 26, 27; 40a, 40b, 41a, 41b) bestimmen, zwischen welchen eine Mehrzahl von Wälzlagern (25, 30: 39) positioniert ist,
**dadurch gekennzeichnet, dass**
zumindest eine von den Laufoberflächen (23, 24, 26, 27: 40a, 40b, 41a, 41b) ein Keramikmaterial enthält, wobei die Lageroberflächen von den Lagern ausgebildet werden, indem ein Teil von der Oberflächenschicht von dem Bauteil in einem Bereich entnommen wird, welcher die Lageroberfläche bestimmen wird, und eine Schicht von Keramikmaterial dann in diesem Bereich angelegt wird.

2. Anordnung (6: 32) nach Anspruch 1, **dadurch gekennzeichnet, dass** zumindest eine von den Laufoberflächen (23, 24, 26, 27: 40a, 40b, 41a, 41b) durch eine Keramikbeschichtung ausgebildet ist.

3. Anordnung (6: 32) nach Anspruch 2, **dadurch gekennzeichnet, dass** die Keramikbeschichtung derart maschinell bearbeitet ist, so dass sie mit der umgehenden Oberfläche von dem Laufring bündig abschließt.

4. Anordnung (6: 32) nach Anspruch 2 oder 3, **dadurch gekennzeichnet, dass** die Keramikbeschichtung durch thermisches Besprühen angelegt ist.

5. Anordnung (6: 32) nach einem der Ansprüche 2 bis 4, **dadurch gekennzeichnet, dass** die Keramikbeschichtung eine Dicke zwischen einschließlich 30 µm und 70 µm hat.

6. Anordnung (6: 32) nach einem der Ansprüche 1 bis 5, **dadurch gekennzeichnet, dass** die Wälzlager (25, 30: 39) ein Keramikmaterial enthalten.

7. Anordnung (6: 32) nach einem der Ansprüche 1 bis 6, bei welcher zumindest zwei reibarme Lager (17, 18: 38a, 38b) zwischen der Taumelscheibe (13: 36) und der Wankscheibe (16: 35) bereitgestellt sind, **dadurch gekennzeichnet, dass** zumindest eine von den Laufoberflächen (23, 24, 26, 27: 40a, 40b, 41 a, 41 b) von jedem von den Lagern (17, 18: 38a, 38b) durch eine Keramikbeschichtung ausgebildet ist.

8. Anordnung (6: 32) nach Anspruch 7, **dadurch gekennzeichnet, dass** die Keramik-Laufoberflächen (24, 27: 37a, 37b) auf der Wankscheibe (16: 35) bereitgestellt sind.

9. Anordnung (6: 32) nach Anspruch 8, bei welcher die Wankscheibe (16: 35) zusätzlich mit zumindest einer Gleitfläche (20a, 20b: 43a, 43b) zum Zusammenwirken mit einer Lageranordnung (19) bereitgestellt ist, welche zwischen der Wankscheibe (16: 35) und einem Kolben (8) positioniert ist, und **dadurch gekennzeichnet, dass** die Gleitfläche (20a, 20b: 43a, 43b) durch eine Keramikbeschichtung ausgebildet ist.

10. Anordnung (6: 32) nach Anspruch 7, **dadurch gekennzeichnet, dass** die Keramik-Laufoberflächen (23, 26: 41a, 41b) auf der Taumelscheibe (13, 36) bereitgestellt sind.

11. Anordnung (6: 32) nach einem der Ansprüche 1 bis 10, **dadurch gekennzeichnet, dass** das Keramikmaterial eines aus Siliziumnitrit, Zirkonoxid und Wolframcarbid enthält.

12. Anordnung (6: 32) nach einem der Ansprüche 1 bis 11, **dadurch gekennzeichnet, dass** zumindest eine von den zwei Laufoberflächen (23, 24, 26, 27: 40a, 40b, 41a, 41b) von dem Lager (17, 18: 38a, 38b) mit der Taumelscheibe (13: 26) oder der Wankscheibe (16: 35) einstückig ausgebildet ist.

13. Anordnung (6: 32) nach Anspruch 12, **dadurch gekennzeichnet, dass** eine (24, 27: 40a, 40b) von den zwei Laufoberflächen von dem Lager (17, 18: 38a, 38b) mit der Wankscheibe (16: 35) einstückig ausgebildet ist.

14. Anordnung (6: 32) nach Anspruch 12 oder 13, **dadurch gekennzeichnet, dass** das Lager (17: 38a, 38b) zwischen anliegenden, sich radial erstreckenden Flächen (23, 24: 40a, 40b, 41a, 41b) von der Taumelscheibe (13: 36) und der Wankscheibe (16: 35) positioniert ist.

15. Anordnung (6) nach Anspruch 12 oder 13, **dadurch gekennzeichnet, dass** das Lager (18) zwischen anliegenden Umfangsflächen (26, 27) von der Taumelscheibe (13) und der Wankscheibe (16) positioniert ist.

16. Anordnung (6) nach Anspruch 15, **dadurch gekennzeichnet, dass** ein äußerer Laufring von dem Lager (18) einstückig mit der Wankscheibe (16) ausgebildet ist, und ein innerer Laufring von dem Lager (18) einstückig mit der Taumelscheibe (13) ausgebildet ist.

17. Anordnung (32) nach einem der Ansprüche 1 bis 16, **dadurch gekennzeichnet, dass** die Wankscheibe (35) eine zweistückige Wankscheibe (37a, 37b) enthält, welche an jeder Seite von einer zentralen Taumelscheibe (36) befestigt ist, wobei jeweils zwei reibarme Lager (38a, 38b) dazwischen positioniert sind.

18. Anordnung (32) nach Anspruch 17, **dadurch gekennzeichnet, dass** die Wankscheibe (35) zwei separate Ringstücke (37a, 37b) enthält, welche jeweils an jeder Seite von der Taumelscheibe (36) eingepasst sind.

19. Anordnung (32) nach Anspruch 18, **dadurch gekennzeichnet, dass** die Masse von jedem von den Ringstücken (37a, 37b), welche in der Wankscheibe (35) enthalten sind, weniger als 50 g beträgt.

20. Anordnung (32) nach Anspruch 17, **dadurch gekennzeichnet, dass** die Wankscheibe (35) umlaufend um die Kante von der Taumelscheibe (36) eingepasst ist.

21. Anordnung (32) nach Anspruch 20, **dadurch gekennzeichnet, dass** ein Radiallager zwischen der Wankscheibe (35) und der Taumelscheibe (36) um die Umfangskante von der Taumelscheibe (36) bereitgestellt ist.

22. Anordnung (32) nach einem der Ansprüche 18 bis 21, **dadurch gekennzeichnet, dass** die Wälzlager (39) Nadellager oder Rolllager enthalten.

23. Anordnung (32) nach einem der Ansprüche 18 bis 22, **dadurch gekennzeichnet, dass** die Außenoberflächen von der Wankscheibe (35) gegenüberliegend zu den Laufoberflächen (40a, 40b) Gleitflächen (43a, 43b) zum Zusammenwirken mit einer Lageranordnung (19) enthalten, welche zwischen der Wankscheiben-Anordnung (32) und einem Kolben (8) positioniert ist.

24. Anordnung (6: 32) nach einem der Ansprüche 1 bis 23, **dadurch gekennzeichnet, dass** die Wankscheibe (16: 35) zwei Dreh-Freiheitsgrade hat, so dass sie sich zusammenwirkend mit der Taumelscheibe (13: 36) umdrehen kann und in Relation zu der Taumelscheibe (13: 26) umdrehen kann.

25. Anordnung (6: 32) nach einem der Ansprüche 1 bis 24, **dadurch gekennzeichnet, dass** die Taumelscheibe (13: 26) und die Wankscheibe (16: 35) während des Zusammenbaus von dem Lager (17, 18: 38a, 38b) miteinander verbunden werden, um eine integrierte Lagereinheit auszubilden, aus welcher das Lager (17, 18: 38a, 38b) nicht separat entnommen werden kann.

26. Anordnung (6: 32) nach Anspruch 25, **dadurch gekennzeichnet, dass** die Wälzlager (18: 38a, 38b) durch den Einsatz von einem Käfig (31: 42) zwischen den zwei Laufringen von dem Lager (18: 38a, 38b) in ihrer Position beibehalten sind.

27. Anordnung (6: 32) nach einem der Ansprüche 1 bis 26, **dadurch gekennzeichnet, dass** die Wankscheibe (16; 35) eines aus einer Aluminiumlegierung, einem ungehärteten Stahl und einem gehärteten Stahl enthält.

28. Anordnung nach einem der Ansprüche 1 bis 27, **dadurch gekennzeichnet, dass** die Taumelscheibe (13: 26) aus gehärtetem Stahl erstellt ist.

29. Kompressor (1) für ein Fahrzeug-Klimaanlagensystem, **dadurch gekennzeichnet, dass** er eine Wankscheiben-Anordnung (6: 32) nach einem der Ansprüche 1 bis 28 enthält.

30. Kompressor (1) für ein Fahrzeug-Klimaanlagensystem, welcher zumindest einen Kolben (8), welcher in einem Zylinder (9) bewegbar ist, eine Antriebswelle (7: 33), eine Wankscheiben-Anordnung (6: 32), welche eine Taumelscheibe (13: 26), auf welcher eine Wankscheibe (16: 35) drehbar befestigt ist, welche zwischen dem Kolben (8) und der Antriebswelle (7: 33) positioniert ist, und zumindest ein reibarmes Lager (17; 18: 38a, 38b) enthält, welches zwischen der Taumelscheibe (13: 26) und der Wankscheibe (16: 35) positioniert ist, und zwei Laufringe enthält, welche Laufoberflächen (23, 24, 26, 27: 40a, 40b, 41a, 41b) bestimmen, zwischen welchen eine Mehrzahl von Wälzlagern (25, 30: 39) positioniert ist, enthält, und
**dadurch gekennzeichnet, dass**
zumindest eine von den Laufoberflächen (23, 24, 26, 27: 40a, 40b, 41a, 41b) ein Keramikmaterial enthält, wobei die Lageroberflächen von den Lagern ausgebildet werden, indem ein Teil von der Oberflächenschicht von dem Bauteil in einem Bereich entnommen wird, welcher die Lageroberfläche bestimmen wird, und eine Schicht von Keramikmaterial dann in diesem Bereich angelegt wird.

31. Kompressor (1) nach Anspruch 30, **dadurch gekennzeichnet, dass** die Taumelscheibe (13: 26) und die Wankscheibe (16: 35) während des Zusammenbaus von dem Lager (17, 18: 38a, 38b) miteinander verbunden werden, um eine integrierte Lagereinheit auszubilden, aus welcher das Lager (17, 18: 38a, 38b) nicht separat entnommen werden kann.

32. Kompressor (1) nach Anspruch 30 oder 31, bei welchem die Wankscheibe (16: 35) zusätzlich mit zumindest einer Gleitfläche (20a, 20b: 43a, 43b) zum Zusammenwirken mit einer Lager-Anordnung (19) bereitgestellt ist, welche zwischen der Wankscheiben-Anordnung (6: 32) und einem Kolben (8) positioniert ist, und **dadurch gekennzeichnet, dass** die Gleitfläche (20a, 20b: 43a, 43b) durch eine Keramikbeschichtung ausgebildet ist.

33. Kompressor (1) nach einem der Ansprüche 30 bis 32, bei welchem die Taumelscheibe (13) durch eine Antriebsscheibe (10) angetrieben ist, welche an der Antriebswelle (7) befestigt ist, und ein Axiallager (12) zwischen der Antriebsscheibe (10) und einem Gehäuse (4) von dem Kompressor (1) positioniert ist, und **dadurch gekennzeichnet, dass** zumindest eine Laufoberfläche von dem Axiallager (12) eine Keramikbeschichtung enthält, welche an einer Innenoberfläche von dem Gehäuse (4) und/oder der Antriebsscheibe (10) ausgebildet ist.

34. Kompressor nach einem der Ansprüche 30 bis 32, welcher einen fixierten Kolben-Hubraum hat, **dadurch gekennzeichnet, dass** die Wankscheibe (35) eine zweistückige Wankscheibe (37a, 37b) enthält, welche an jeder Seite von einer zentralen Taumelscheibe (36) befestigt ist, wobei jeweils zwei reibarme Lager (38a, 38b) dazwischen positioniert sind.

35. Kompressor nach Anspruch 34**, dadurch gekennzeichnet, dass** die Wankscheibe (35) zwei zugewandte Ringe (37a, 37b) enthält, welche jeweils an gegenüberliegenden Seiten von der Taumelscheibe (36) befestigt sind.

36. Kompressor nach Anspruch 34 oder 35, **dadurch gekennzeichnet, dass** eine Querachse (43) von den Lagern (38a, 38b) derart angeordnet ist, dass sie mit einer Längsachse (44) von dem Kolben (8), welcher durch die Wankscheiben-Anordnung (32) angetrieben ist, bei einem Punkt bei der Umdrehung von der Taumelscheibe (36) übereinstimmen wird, wenn eine Kraft zunächst auf den Kolben (8) in eine Richtung zu dem Zylinder (9) angelegt wird.

37. Kompressor nach Anspruch 36, **dadurch gekennzeichnet, dass** der Durchmesser von einer Gleitoberfläche von der Lager-Anordnung (19), welche zwischen der Wankscheibe (35) und einem Kolben (8) positioniert ist, entsprechend dem Betriebsdurchmesser von dem Kolben (8) ist.

## Revendications

1. Ensemble de plateau en biais (6 : 32) pour un compresseur à came plate (1) comprenant un disque cyclique (13 : 36), sur lequel est monté, de façon rotative, un plateau en biais (16 : 35), et au moins un organe de roulement (17, 18 : 38a, 38b) situé entre les deux, qui comprend deux bagues de roulement définissant des surfaces de roulement (23, 24, 26, 27 : 40a, 40b, 41 a, 41 b) entre lesquelles est située une pluralité de paliers à roulement (25, 30 : 39), **caractérisé en ce qu'**au moins l'une des surfaces de roulement (23, 24, 26, 27 : 40a, 40b, 41a, 41b) comprend un matériau céramique, dans laquelle les surfaces des paliers sont formées par un enlèvement d'une partie de la couche de surface du composant dans la région qui définira la surface de palier et une couche de matériau céramique est ensuite appliquée à cette région.

2. Ensemble (6 : 32) selon la revendication 1, **caractérisé en ce qu'**au moins l'une des surfaces de roulement (23, 24, 26, 27 : 40a, 40b, 41 a, 41 b) est formée par un revêtement en céramique.

3. Ensemble (6 : 32) selon la revendication 2, **caractérisé en ce que** le revêtement en céramique a été usiné de sorte qu'il soit à fleur de la surface périphérique de la bague de roulement.

4. Ensemble (6 : 32) selon la revendication 2 ou 3, **caractérisé en ce que** le revêtement en céramique a été appliqué par pulvérisation à chaud.

5. Ensemble (6 : 32) selon l'une quelconque des revendications 2 à 4, **caractérisé en ce que** le revêtement en céramique possède une épaisseur comprise entre 30 et 70 µm inclus.

6. Ensemble (6 : 32) selon l'une quelconque des revendications 1 à 6, **caractérisé en ce que** les paliers à roulement (25, 30 : 39) comprennent un matériau céramique.

7. Ensemble (6 : 32) selon l'une quelconque des revendications 1 à 6, dans lequel au moins deux organes de roulement (17, 18 : 38a, 38b) sont prévus entre le disque cyclique (13 : 36) et le plateau en biais (16 : 35), **caractérisé en ce qu'**au moins l'une des surfaces de roulement (23, 24, 26, 27 : 40a, 40b, 41a, 41b) de chaque organe de roulement (17, 18 : 38a, 38b) est formée par un revêtement en céramique.

8. Ensemble (6 : 32) selon la revendication 7, **caractérisé en ce que** les surfaces de roulement en céramique (24, 27 : 37a, 37b) sont prévues sur le plateau en biais (16 : 35).

9. Ensemble (6 : 32) selon la revendication 8, dans lequel le plateau en biais (16 : 35) est équipé en outre d'au moins une face de glissement (20a, 20b : 43a, 43b) pour la coopération avec un ensemble de palier (19) situé entre le plateau en biais (16 : 35) et un piston (8), et **caractérisé en ce que** la face de glissement (20a, 20b : 43a, 43b) est formée par un revêtement en céramique.

10. Ensemble (6 : 32) selon la revendication 7, **caractérisé en ce que** les surfaces de roulement en céramique (23, 26 : 41 a, 41 b) sont prévues sur le disque cyclique (13, 36).

11. Ensemble (6 : 32) selon l'une quelconque des revendications 1 à 10, **caractérisé en ce que** le matériau céramique comprend l'un des composants suivants : nitrure de silicium, oxyde de zirconium et carbure de tungstène.

12. Ensemble (6 : 32) selon l'une quelconque des revendications 1 à 11, **caractérisé en ce qu'**au moins l'une des deux surfaces de roulement (23, 24, 26, 27 : 40a, 40b, 41a, 41b) de l'organe de roulement (17, 18 : 38a, 38b) est formée d'une pièce avec le disque cyclique (13 : 26) ou le plateau en biais (16 : 35).

13. Ensemble (6 : 32) selon la revendication 12, **caractérisé en ce que** l'une (24, 27 : 40a, 40b) des deux surfaces de roulement de l'organe de roulement (17, 18 : 38a, 38b) est intégralement formée avec le plateau en biais (16 : 35).

14. Ensemble (6 : 32) selon la revendication 12 ou 13, **caractérisé en ce que** l'organe de roulement (17 : 38a, 38b) est situé entre des faces (23, 24 : 40a, 40b, 41a, 41b) s'étendant radialement de manière opposée du disque cyclique (13 : 36) et du plateau en biais (16 : 35).

15. Ensemble (6) selon la revendication 12 ou 13, **caractérisé en ce que** le palier (18) est situé entre des faces (26, 27) circonférentielles opposées du disque cyclique (13) et du plateau en biais (16).

16. Ensemble (6) selon la revendication 15, **caractérisé en ce qu'**une bague de roulement extérieure du palier (18) est formée d'une pièce avec le plateau en biais (16) et une bague de roulement intérieure du palier (18) est formée d'une pièce avec le disque en cyclique (13).

17. Ensemble (32) selon l'une quelconque des revendications 1 à 16, **caractérisé en ce que** le plateau en biais (35) comprend un plateau en biais (37a, 37b) en deux parties qui est monté de chaque côté d'un disque cyclique (36) central avec deux organes de roulement (38a, 38b) situés respectivement entre les deux.

18. Ensemble (32) selon la revendication 17, **caractérisé en ce que** le plateau en biais (35) comprend deux pièces (37a, 37b) annulaires séparées qui sont installées respectivement de chaque côté du disque cyclique (36).

19. Ensemble (32) selon la revendication 18, **caractérisé en ce que** la masse de chacune des pièces annulaires (37a, 37b) comprenant le plateau en biais (35) est inférieure à 50 g.

20. Ensemble (32) selon la revendication 17, **caractérisé en ce que** le plateau en biais (35) est installé de manière périphérique autour de l'arête du disque cyclique (36).

21. Ensemble (32) selon la revendication 20, **caractérisé en ce qu'**un palier radial est prévu entre le plateau en biais (35) et le disque cyclique (36) autour de l'arête périphérique du disque cyclique (36).

22. Ensemble (32) selon l'une quelconque des revendications 18 à 21, **caractérisé en ce que** les paliers à roulement (39) comprennent des roulements à aiguilles ou des roulements à rouleaux.

23. Ensemble (32) selon l'une quelconque des revendications 18 à 22, **caractérisé en ce que** les surfaces extérieures du plateau en biais (35) opposées aux surfaces de roulement (40a, 40b) comprennent des faces de glissement (43a, 43b) pour la coopération avec un ensemble de palier (19) situé entre l'ensemble de plateau en biais (32) et un piston (8).

24. Ensemble (6 : 32) selon l'une quelconque des revendications 1 à 23, **caractérisé en ce que** le plateau en biais (16 : 35) possède deux degrés de liberté de rotation de sorte à pouvoir pivoter conjointement avec le disque cyclique (13 : 36) et pivoter par rapport au disque cyclique (13 : 26).

25. Ensemble (6 : 32) selon l'une quelconque des revendications 1 à 24, **caractérisé en ce que** le plateau en biais (13 : 26) et le disque cyclique (16 : 35) sont joints l'un à l'autre pendant l'assemblage du palier (17, 18 : 38a, 38b) pour former une unité de palier intégrée, de laquelle le palier (17, 18 : 38a, 38b) ne peut pas être détaché séparément.

26. Ensemble (6 : 32) selon la revendication 25, **caractérisé en ce que** les paliers à roulement (18 : 38a, 38b) sont maintenus en position par l'insertion d'une cage (31 : 42) entre les deux bagues de roulement du palier (18 : 38a, 38b).

27. Ensemble (6 : 32) selon l'une quelconque des revendications 1 à 26, **caractérisé en ce que** le plateau en biais (16 ; 35) comprend l'un des composants suivants : un alliage d'aluminium, un acier non durci, et un acier revenu.

28. Ensemble (6 : 32) selon l'une quelconque des revendications 1 à 27, **caractérisé en ce que** le disque cyclique (13 : 26) est en acier revenu.

29. Compresseur (1) pour un système de conditionnement d'air de véhicule, **caractérisé en ce qu'**il comprend un ensemble de plateau en biais (6 : 32) selon l'une quelconque des revendications 1 à 28.

30. Compresseur (1) pour un système de conditionnement d'air de véhicule comprenant au moins un piston (8) mobile dans un cylindre (9), un arbre d'entraînement (7 : 33), un ensemble de plateau en biais (6 : 32) comprenant un plateau en biais (13 : 26) sur lequel est monté, de façon rotative, un disque cyclique (16 : 35) situé entre le piston (8) et l'arbre d'entraînement (7 : 33), et au moins un organe de roulement (17, 18 : 38a, 38b) situé entre le disque cyclique (13 : 26) et le plateau en biais (16 ; 35) et comprenant deux bagues de roulement définissant des surfaces de roulement (23, 24, 26, 27 : 40a, 40b, 41 a, 41 b) entre lesquelles est située une pluralité de paliers à roulement (25, 30 : 39) et **caractérisé en ce qu'**au moins l'une des surfaces de roulement (23, 24, 26, 27 : 40a, 40b, 41a, 41b) comprend un matériau céramique, dans laquelle les surfaces des paliers sont formées par un enlèvement d'une partie de la couche de surface du composant dans la région qui définira la surface de palier et une couche de matériau céramique est ensuite appliquée à cette région.

31. Compresseur (1) selon la revendication 30, **caractérisé en ce que** le disque cyclique (13 : 26) et le plateau en biais (16 : 35) ont été joints l'un à l'autre pendant l'assemblage du palier (17, 18 : 38a, 38b) pour former une unité de palier intégrée, de laquelle le palier (17, 18 : 38a, 38b) ne peut pas être détaché séparément.

32. Compresseur (1) selon la revendication 30 ou 31, dans lequel le plateau en biais (16 : 35) est équipé en outre d'au moins une face de glissement (20a, 20b : 43a, 43b) pour la coopération avec un ensemble de palier (19) situé entre l'ensemble de plateau en biais (6 : 32) et un piston (8), et **caractérisé en ce que** la face de glissement (20a, 20b : 43a, 43b) est formée par un revêtement en céramique.

33. Compresseur (1) selon l'une quelconque des revendications 30 à 32, dans lequel le disque cyclique (13) est entraîné par une plaque d'entraînement (10) fixée à l'arbre d'entraînement (7) et un palier de butée (12) est situé entre la plaque d'entraînement (10) et un carter (4) du compresseur (1), et **caractérisé en ce qu'**au moins une surface de roulement du palier de butée (12) comprend un revêtement en céramique formé sur la surface intérieure du carter (4) et/ou de la plaque d'entraînement (10).

34. Compresseur selon l'une quelconque des revendications 30 à 32, qui présente un déplacement de piston fixe, **caractérisé en ce que** le plateau en biais (35) comprend un plateau en biais (37a, 37b) en deux parties qui est monté de chaque côté d'un disque cyclique (36) central avec deux organes de roulement (38a, 38b) situés respectivement entre les deux.

35. Compresseur selon la revendication 34, **caractérisé en ce que** le plateau en biais (35) comprend deux bagues de roulement (37a, 37b) se faisant face montées respectivement sur des côtés opposés du disque cyclique (36).

36. Compresseur selon la revendication 34 ou 35, **caractérisé en ce qu'**un axe transversal (43) des paliers (38a, 38b) est disposé de sorte à coïncider avec un axe longitudinal (44) du piston (8) entraîné par l'ensemble de plateau en biais (32) à un point de la rotation du disque cyclique (36) lorsque la force sera tout d'abord appliquée au piston (8) vers le cylindre (9).

37. Compresseur selon la revendication 36, **caractérisé en ce que** le diamètre d'une surface de glissement de l'ensemble de palier (19) situé entre le plateau en biais (35) et un piston (8) est proportionné au diamètre opérationnel du piston (8).
